# EUROPEAN PATENT APPLICATION

(11) **EP 2 538 379 A1**
(43) Date of publication of application: **26.12.2012**
(21) Application number: 12173134.3
(22) Date of filing: 22.06.2012
(51) Int. Cl.: G06Q 10/06

(54) **Information processing apparatus and control method thereof, and storage medium**

(30) Priority: 22.06.2011 JP 2011138656
(71) Applicant: CANON KABUSHIKI KAISHA, Ohta-ku Tokyo 146-8501 (JP)
(72) Inventor: Yamamichi, Masaki, Ohta-ku, Tokyo (JP)
(74) Representative: Foxon, Rachel Siobhan

(57) **Abstract**

When a document processing program constituting a workflow system includes a user interface and a plurality of types of editing processing can be executed by a user's operation, an erroneous operation is executed, so that a mismatch may occur in a workflow. When a selected document is transmitted to a second processing program, a user interface that disables a user to select a predetermined function is displayed.

## Description

### BACKGROUND OF THE INVENTION

### Field of the Invention

The present invention relates to a method for controlling user interfaces of a plurality of document processing programs in a document processing system that transfers data among the plurality of document processing programs.

### Description of the Related Art

A user can apply a plurality of types of processing to a document by using a plurality of document processing programs. For example, it is assumed that there is provided a document processing system (hereinafter, referred to as a workflow system) in which a first document processing program, a second document processing program, and a third document processing program process a scan document.

In the workflow system, first, the first document processing program receives a scan image as a document. The second document processing program performs edition processing (for example, a change of an attribute) on the document. The third document processing program performs optical character recognition (OCR) processing on the document and can create the document as a final product.

When the document processing is performed consecutively among different programs as described above, transfer processing of the document is programmed among the programs, such that the document can be transferred among the programs. Data can be transferred via a folder referred to as a hot folder, which two programs both can refer to (see, for example, Japanese Patent Application Laid-open No. 2000-118095).

In the case of the workflow system described above, a second program at a receiving side monitors generation of the document with respect to the hot folder. Meanwhile, a first program at a transmitting side puts a processing-completed document in the hot folder which is being monitored, such that the second program at the receiving side acquires the document. Accordingly, the document can be transferred. Since the data transfer processing need not be programmed in advance between the transmitting-side program and the receiving-side program, implementation such as definition of communication between systems is not required, such that the program can be created by individual independent systems.

However, when the document processing programs constituting the workflow system include the user interfaces and a plurality of editing processing can be achieved by a user's operation, an erroneous operation is executed, such that a mismatch may occur in a workflow.

For example, it is assumed that the second document processing program includes the user interface and the plurality of editing processing can be achieved in the workflow system described above. In a normal situation, the second document processing program changes, for example, an attribute of a document (for example, a document name) and needs to transfer the document to the third document processing program. However, when the document itself is deleted by the user in the second document processing program, the document to be transmitted to the third document processing program is not present, and as a result, the workflow to be satisfied cannot be executed and the mismatch occurs as the workflow system.

### SUMMARY OF THE INVENTION

According to a first aspect of the present invention, there is provided an information processing apparatus as specified in claims 1 to 5. According to a second aspect of the present invention, there is provided a method as specified in claims 6 to 10. According to a third aspect of the present invention, there is provided a storage medium as specified in claims 11 to 15.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 is a hardware configuration diagram of a personal computer (PC) constituting a workflow system according to an exemplary embodiment of the present invention.

Fig. 2 is a software configuration diagram of the PC constituting the workflow system according to the exemplary embodiment of the present invention.

Fig. 3 is a software configuration diagram of the PC constituting the workflow system according to the exemplary embodiment of the present invention.

Fig. 4 is a flowchart illustrating a processing procedure of performing a start of processing of a workflow according to the exemplary embodiment of the present invention.

Fig. 5 is a flowchart illustrating a processing procedure in which a document processing program selects a processing folder and a document according to the exemplary embodiment of the present invention.

Fig. 6A is a schematic diagram illustrating an example of a processing information file according to the exemplary embodiment of the present invention. Fig. 6B illustrates an example of a data format of the processing information file according to the exemplary embodiment of the present invention.

Fig. 7A is a schematic diagram illustrating an example of an error information file according to the exemplary embodiment of the present invention. Fig. 7B illustrates an example of a data format of the error information file according to the exemplary embodiment of the present invention.

Fig. 8 illustrates an example of a user interface of a document processing program A 205 according to the exemplary embodiment of the present invention.

### DESCRIPTION OF THE EMBODIMENTS

Various exemplary embodiments, features, and aspects of the invention will be described in detail below with reference to the drawings.

In an exemplary embodiment of the present invention, all functions of a workflow system according to the exemplary embodiment are executed by a general information processing apparatus (i.e., a personal computer (PC)).

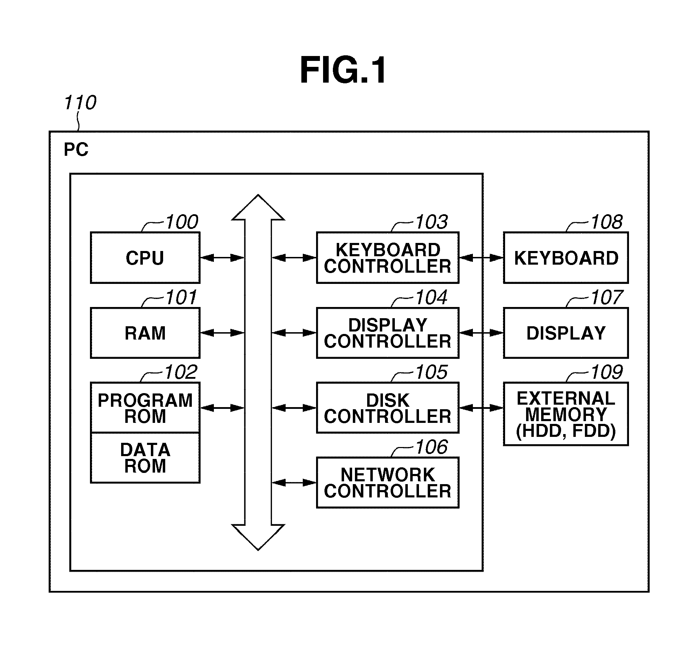

Fig. 1 illustrates a hardware configuration diagram of a PC constituting a workflow system according to an exemplary embodiment of the present invention. The hardware configuration illustrated in Fig. 1 corresponds to a hardware configuration diagram of the general information processing apparatus. The hardware configuration of the general information processing apparatus may be applied to a PC 110 of the present exemplary embodiment.

In Fig. 1, a central processing unit (CPU) 100 executes an operating system (OS) or a program such as an application stored in a program read-only memory (ROM) of a ROM 102 or loaded from a hard disk (HDD) 109 to a random access memory (RAM) 101. The CPU 100 executes the program to implement each processing of the flowchart to be described below.

The RAM 101 serves as a main memory, a work area, and the like of the CPU 100. A keyboard controller 103 controls an input from a pointing device (not illustrated), such as a keyboard 108 or a mouse. A display controller 104 controls display of various displays 107.

A disk controller 105 controls a data access in the hard disk (HDD) 109 storing various data pieces or in a floppy disk (FDD). A network controller 106 is connected to a network to execute communication control processing with other apparatuses connected to the network.

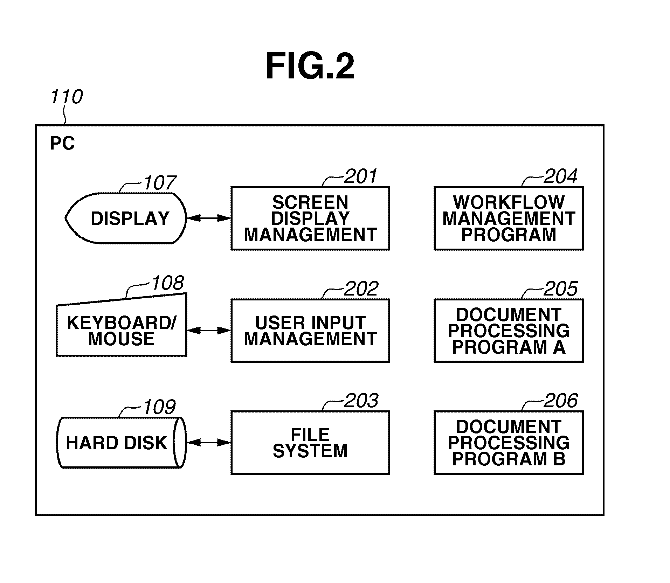

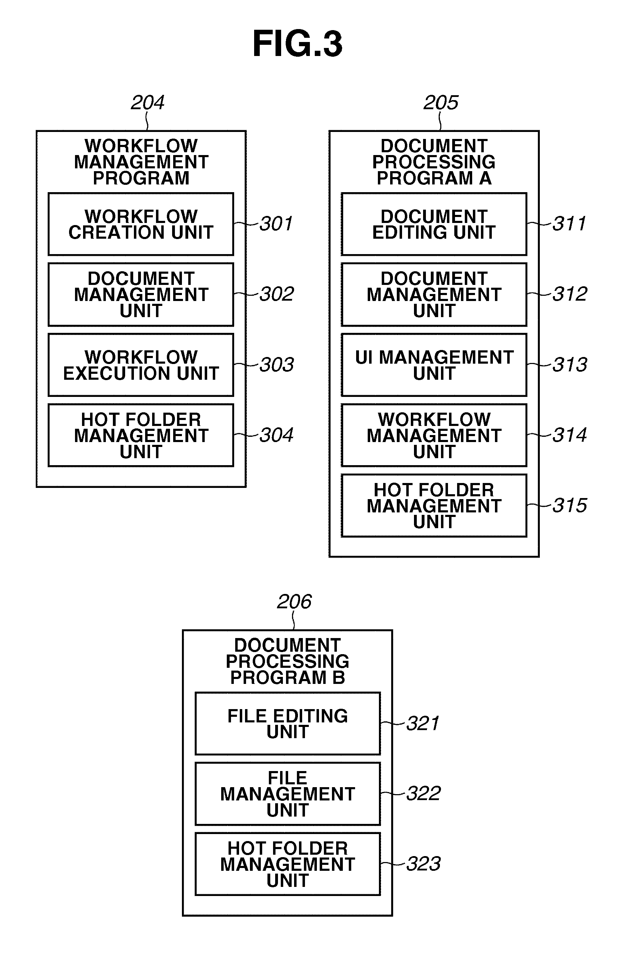

Figs. 2 and 3 illustrate software configuration diagrams of the PC constituting the workflow system according to the exemplary embodiment of the present invention. The workflow system according to the present exemplary embodiment is implemented by a program in which all functions are executed in the PC 110, as described in the hardware configuration.

The PC 110 includes screen display management 201, user input management 202, a file system 203, a workflow management program 204 (a second processing program), a document processing program A 205 (a first processing program), and a document processing program B 206.

The workflow management program 204 generates a workflow for executing a plurality of processing with respect to a document. For example, the workflow management program 204 may generate a workflow in which all the plurality of processing are executed in the workflow management program 204 and generate a workflow in which some of the plurality of processing are executed and other processing is executed by other programs.

For example, the workflow management program 204 may generate a workflow designating the document processing programs A 205 and B 206 as the programs executing other processing. For example, the workflow management program 204 executes a first processing of the plurality of processing with respect to the document. The document processing program A 205 executes a second processing and the document processing program B 206 executes the second processing, with respect to the document to which the first processing is applied. Then, both the programs transmit the processing results to the workflow management program. As a result, the plurality of processing is executed with respect to the document, thereby completing the processing of the workflow.

The file system 203 stores and acquires the document in the hard disk 109 as a file. The user input management 202 detects a user's operation of the keyboard/mouse 108 to perform instructions to the workflow management program 204, the document processing program A 205, and the document processing program B 206 according to the operation. The screen display management 201 displays on the display 107 operation results of the workflow management program 204, the document processing program A 205, and the document processing program B 206.

The workflow management program 204 that generates the workflow for the document includes a workflow creation unit 301, a document management unit 302, a workflow execution unit 303, and a hot folder management unit 304.

The workflow creation unit 301 creates the workflow for the document according to the instruction to create the workflow from the user input management 202. The document management unit 302 manages the document as the file and executes a file operation of the document according to an instruction to execute the file operation from the user input management 202.

The workflow execution unit 303 starts workflow processing of the document according to an instruction to execute the workflow from the user input management 202.

The hot folder management unit 304 waits for an input document by monitoring the hot folder for storing the document when the processing is completed or an error occurs. When the document is generated in the hot folder, the hot folder management unit 304 instructs the document management unit 302 to execute input processing of the document. In the present invention, an example in which the workflow management program 204, the document processing program A 205, and the document processing program B 206 operate in the same PC is described. However, the workflow management program 204 may operate in a server other than the PC.

The document processing program A 205 that performs first processing on the document includes a document editing unit 311, a document management unit 312, a user interface (UI) management unit 313, a workflow management unit 314, and a hot folder management unit 315.

The document editing unit 311 executes edition of the document according to an instruction to execute the edition from the user input management 202. The document management unit 312 executes a file operation of the document according to an instruction to execute the file operation from the user input management 202.

The UI management unit 313 instructs the screen display management 201 to display a UI for performing various editions or movement of the document. The workflow management unit 314 refers to document information of a processing target of the workflow and instructs the UI management unit 313 to switch a UI display.

The hot folder management unit 315 waits for receiving an input document by monitoring a receiving hot folder. When the document is generated within the hot folder, the hot folder management unit 315 instructs the document management unit 312 to execute input processing of the document.

The document processing program B 206 that performs the second processing on the document includes a file editing unit 321, a file management unit 322, and a hot folder management unit 323.

The file editing unit 321 executes edition of the document according to an instruction to execute the edition from the user input management 202.

The file management unit 322 executes the file operation of the document according to an instruction to execute the file operation from the user input management 202. The hot folder management unit 323 waits for receiving the input document by monitoring the receiving hot folder. When the document is generated within the hot folder, the hot folder management unit 323 instructs the file management unit 322 to execute input processing of the document.

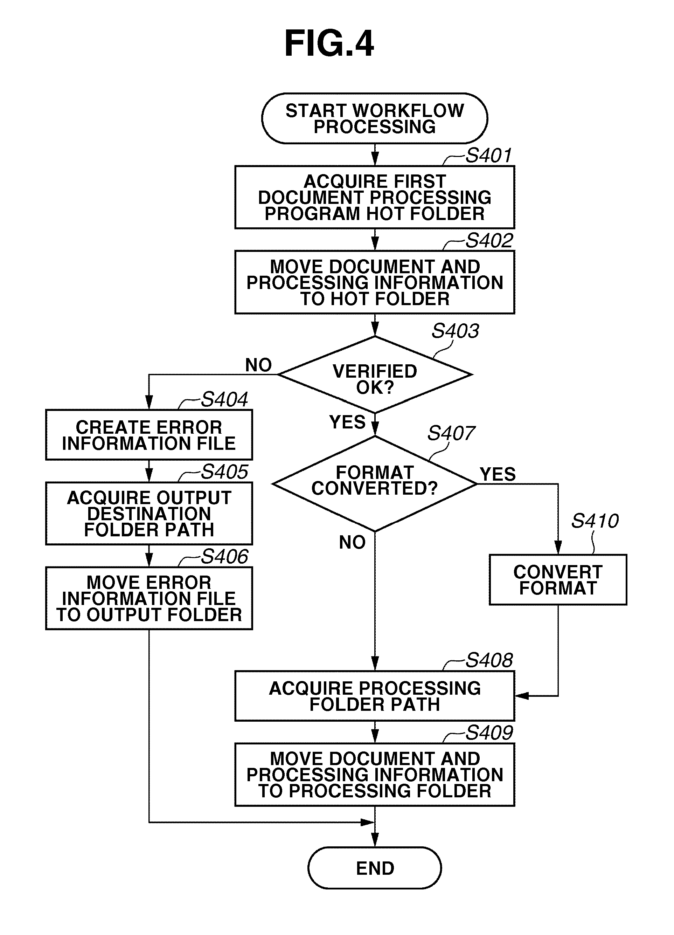

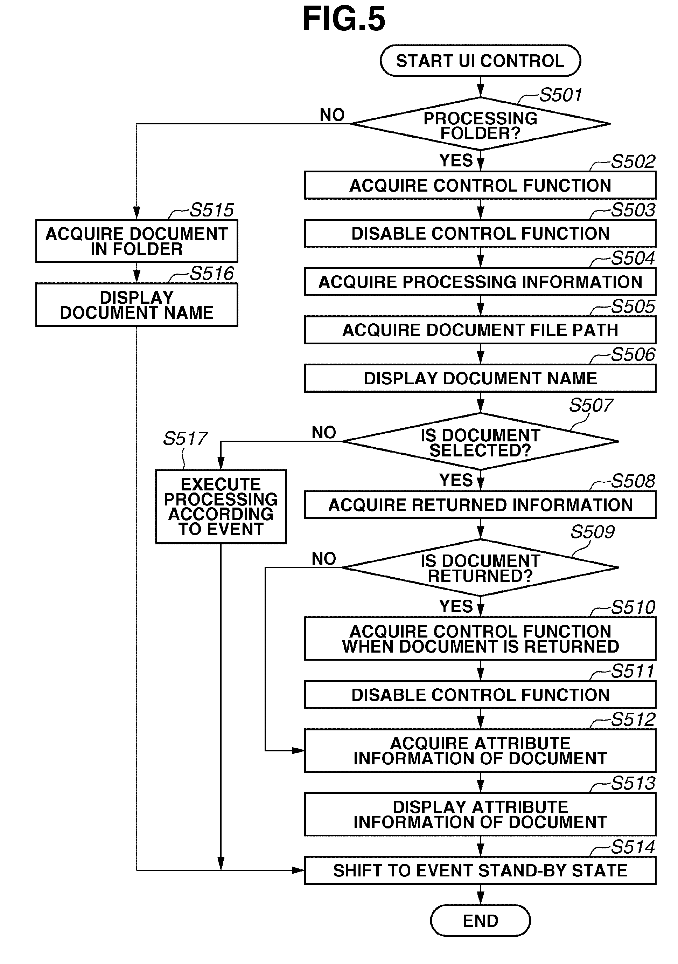

Flows of a document movement and UI control in the workflow system according to the exemplary embodiment of the present invention will be described with reference to the software configuration diagrams in Figs. 2 and 3 and the flowcharts in Figs. 4 and 5.

In the present exemplary embodiment, in the workflow executed by the workflow management program 204, the first document processing is performed in the document processing program A 205 which includes a user interface capable of editing the document. The second document processing is performed in the document processing program B 206 that does not include the user interface. Even though an order of the processing or contents and the number of times of the processing are changed, the present invention may be applied.

The CPU 100 of the PC 110 reads and executes a relevant program from the memory to implement each step in the flowchart of the present invention.

When the user instructs the workflow management program 204 to operate the execution of the workflow by the keyboard/mouse 108, the user input management 202 detects an operation to the keyboard/mouse 108. The execution of the workflow is thus instructed to the workflow management program 204. The workflow management program 204 that receives the instruction starts executing the workflow according to the flowchart illustrated in Fig. 4.

In step S401, the hot folder management unit 304 acquires a position of the hot folder set by the hot folder management unit 315 of the first document processing program A 205. Information about the position of the hot folder may be configured to use a registry or a set file and is previously set before executing the processing by the hot folder management unit 315.

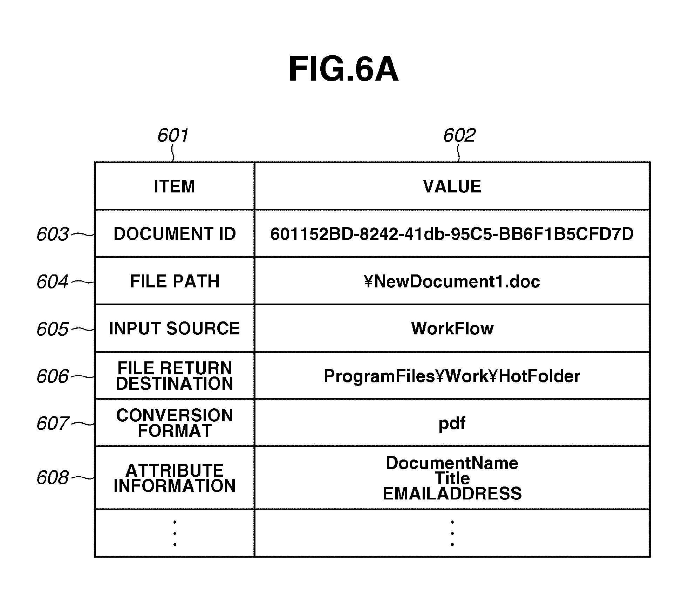

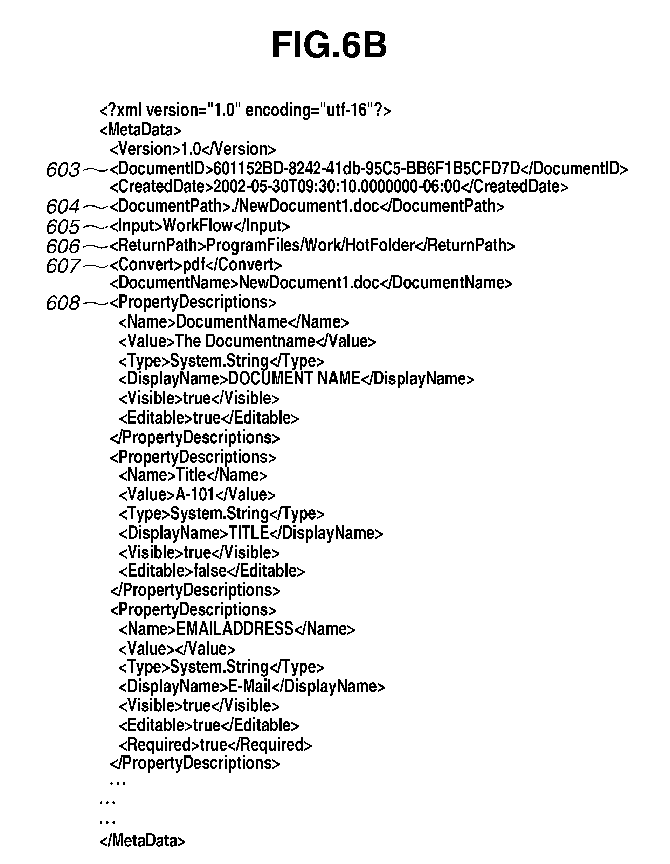

In step S402, the workflow execution unit 303 creates a processing information file illustrated in Figs. 6A and 6B and stores the instructed document and the processing information file at the position of the hot folder acquired in step S401.

Fig. 6A is a schematic diagram illustrating an example of the processing information file. An item 601 and value 602 are enumerated in the processing information file. An identification (ID) of a document to be processed is stored in a document ID 603. A file path of the document to be processed is stored in a file path 604. Information for specifying a person input the information such as a module name storing the document is stored in an input source 605.

A folder path storing the processed document or an error information file to be described below is stored in a file return destination 606. A file that does not need to be returned may be designated by leaving information of the file return destination 606 blank. In the present invention, the document edited by the document processing program A 205 is transmitted to the workflow management program 204 via the hot folder. Therefore, a file path of the hot folder managed by the workflow management program 204 is described in the file return destination 606.

A type (for example, an extension) of a document format at the time of returning the document to be processed is stored in a conversion format 607. Attribute information (property) of the document to be processed is stored in attribute information 608. A value, whether an attribute is displayed, whether the attribute is editable, or the like is stored in the attribute information 608 for each type of the attribute.

In an actual program, the processing information file may be expressed in a data format referred to as Extensible Markup Language (XML) illustrated in Fig. 6B. The processing information file is generated based on setting information input by the user via the user interface provided by the workflow management program. For example, the conversion format is designated by the user.

The first document processing program A 205 that manages the hot folder storing the document and the processing information file in step S402 performs processing in steps S403 to S410. In step S403, the hot folder management unit 315 performs file verification on the document and the processing information file which are stored in the hot folder. More specifically, the hot folder management unit 315 determines whether the document processing program A 205 can refer to the document (whether a reference authority is correct) and whether the format of the processing information file is correct. The hot folder management unit 315 determines that the format of the processing information file is not correct when required information is short in the processing information file.

The document processing program A 205 uniquely stores the format information of the processing information file in the program file and uses the format information of the processing information file during verification. During the verification in step S403, it may also be determined whether the type of the document is editable. In this case, the document processing program A 205 may uniquely store the type of the editable file and the format information of the document processing information file in the program file or in the registry.

According to the determination result, when it is determined that the format of the information processing file is correct (the document can be processed, YES in step S407), the processing proceeds to step S407. When it is determined that the format of the information processing file is not correct (NO in step S403), the processing proceeds to step S404.

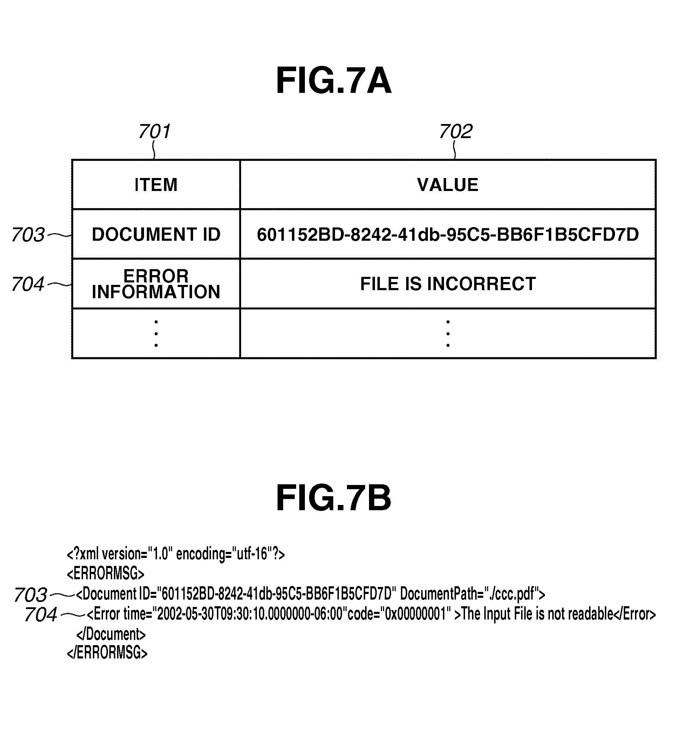

In step S404, the hot folder management unit 315 creates an error information file illustrated in Figs. 7A and 7B, and in step S405, acquires a folder path of an output destination by referring to the processing information file.

In step S406, the hot folder management unit 315 stores the error information file in a folder of the output destination and ends the processing. The workflow management program 204 may specify an error content of the executed workflow by referring to the error information file stored in step S406 at an arbitrary timing after storing.

Fig. 7A is a schematic diagram illustrating an example of the error information file. An item 701 and a value 702 are enumerated in the error information file. An ID of a document in which an error occurs is stored in a document ID 703 as the value. A content of the error which occurs is stored in error information 704. In the actual program, information may be expressed in the data format referred to as XML illustrated in Fig. 7B.

In step S407, the hot folder management unit 315 determines whether the format conversion is required by referring to the conversion format 607 of the processing information file. When it is determined that the format conversion is required (YES in step S407), the processing proceeds to step S410. When it is determined that the format conversion is not required (NO in step S407), the processing proceeds to S408.

As a detailed determination method, it is determined that the conversion of the format is required, for example, when a predetermined type (extension) described in the conversion format is different from the extension of the input document. Meanwhile, in the case of a value indicating that the conversion format is free (for example, variable and blank) or a value (for example, original) indicating maintaining the format of the input document, the hot folder management unit 315 determines that the conversion is not required.

In step S408, the hot folder management unit 315 acquires a processing folder path of the document processing program A 205. A processing folder is a transmission destination of the document stored in the hot folder management unit 304 of Fig. 3. The document edited by the document processing program A 205 according to the instruction from the workflow management program 204 is stored in the processing folder. The document processing program A 205 may uniquely store a value of the processing folder path in the program file or the registry. Further, the folder path may be set by the user, so that the value of the processing folder path may be stored as the file.

In step S409, the hot folder management unit 315 moves the processing-completed document and the processing information file to the processing folder and ends the processing.

In step S410, the hot folder management unit 315 executes the conversion processing of the document format according to the type of the conversion format referred in step S407. In the present exemplary embodiment, the format is converted before the first processing is executed to the document, however the format may be converted after the first processing is executed to the document.

After the processing in step S409, the document processing program A 205 stores the edition-completed document and the processing information file in the hot folder which is a transmission source of the document and the processing information file.

Accordingly, the workflow management program can acquire the edition-completed document stored in the hot folder by monitoring the hot folder. The document processing program A 205 may uniquely recognize the file path of the hot folder or recognize the file path of the hot folder using information of the file return destination of the file information file.

When the user inputs an instruction to the keyboard/mouse 108 to operate selection of a folder of the document processing program A 205, the user input management 202 detects the operation using the keyboard/mouse 108 and instructs the document processing program A 205 to operate selection of the folder. The document processing program A 205 that receives the instruction starts executing the operation of selecting the folder according to the flowchart illustrated in Fig. 5.

In step S501, the workflow management unit 314 determines whether the selected folder is the processing folder. When the selected folder is the processing folder (YES in step S501), the processing proceeds to step S502. When the selected folder is not the processing folder (NO in step S501), the processing proceeds to step S515.

In step S502, the workflow management unit 314 acquires a limited function in the selected processing folder.

The document processing program A 205 may be configured to uniquely store the limited function in the processing folder in the program file or the registry. For example, in the state where the processing folder is selected, a menu screen is displayed so as not to create a new folder.

When the documents from a plurality of input sources can be stored, the limited function may be changed according to the input source by referring to the input source 605 in the processing information file. When the limited function is changed according to the input source, the document processing program A 205 changes the limited function by referring to a file which describes the limited function with respect to each input source.

In step S503, the workflow management unit 314 disables the limited function via the UI management unit 313. The disabling described herein is processing to control a function button of the user interface associated with the function so as not to be selected. For example, when a function to create a new folder within the processing folder is disabled, creation of an associated menu item folder (not illustrated) is disabled.

In step S504, the workflow management unit 314 acquires the processing information file that is present within the processing folder, and in step S505, acquires the file path 604 from the processing information file.

In step S506, the workflow management unit 314 displays a file name of a file stored in the acquired file path as a document name via the UI management unit 313, and the document processing program A 205 shifts into an event stand-by state. The event stand-by state indicates a state waiting for an operation input from the user.

In step S507, when the user instructs the document processing program A 205 to perform a certain operation by the keyboard/mouse 108, the user input management 202 is started by detecting the operation to the keyboard/mouse 108. When the document processing program A 205 accepts the selection of the document within the processing folder by the user input management 202 (YES in step S507), the processing proceeds to step S508. When the other processing is instructed (NO in step S507), the processing proceeds to step S517.

In step S508, the workflow management unit 314 acquires the file return destination 606 in the processing information file.

In step S509, the workflow management unit 314 determines whether the document to be processed needs to be returned by referring to the file return destination 606. When the document to be processed needs to be returned (YES in step S509), the processing proceeds to step S510. When the document to be processed need not be returned (NO in step S509), the processing proceeds to step S512.

In other words, when the document processing program A 205 does not need to transmit a document processed by itself to the workflow management program, the document processing program A 205 displays the user interface that allows the user to select all the functions. The document which need not be returned to the workflow management program is, for example, a document generated by a document application that operates on the PC 110 or a document generated by a spreadsheet application.

In step S510, the workflow management unit 314 acquires a function to be limited when the document is returned. The document processing program A 205 may be configured to uniquely store the function to be limited when the document is returned in the processing folder in the program file or the registry, which corresponds to a function of disabling the processing of returning the document. For example, the function corresponds to deletion of the document or movement of the document. In step S510, the limited function may be switched according to the file return destination 606 referred in step S509.

In step S511, the workflow management unit 314 disables the limited function via the UI management unit 313. In step S511, for example, when deletion is included in a prohibited function, the deletion from the file system 203 may be prohibited by prohibiting the deletion of the file attribute of the document. When the file attribute is changed, the file attribute during inputting is retained. The file attribute during inputting may be retained as the file or stored on the memory.

In step S512, the workflow management unit 314 acquires the attribute information 608 in the processing information file. In step S513, the workflow management unit 314 displays the attribute information of the document via the UI management unit 313. In step S513, a displayed content may be switched according to a content described in the attribute information 608, or whether the document is editable or not may be switched.

In step S514, the document processing program A 205 shifts into the event stand-by state and ends the processing.

In step S515, the document management unit 312 acquires the file that is present within the selected folder. In step S516, the document management unit 312 displays the file name as the document name via the UI management unit 313. In other words, when a folder different from the processing folder as a predetermined folder is selected, the document processing program A 205 displays the user interface that allows the user to select all the functions.

In step S517, the document processing program A 205 executes processing other than the selection of the document according to the user's operation.

After the first document processing is completed by the document processing program A 205 according to the present exemplary embodiment, the user instructs the document processing program A 205 to complete the workflow processing by the keyboard/mouse 108. Accordingly, the user input management 202 instructs the document processing program A 205 to perform the workflow completion processing by detecting the operation to the keyboard/mouse 108.

The hot folder management unit 315 stores the document and the processing information in the file return destination 606 to complete the processing in the document processing program A 205. When the file attribute of the document is changed in step S511, the document processing program A 205 restores the file attribute to a file attribute state during inputting, which is stored in step S511.

The hot folder management unit 304 in the workflow management program 204 detects storing of the document and the processing information file and instructs the second document processing program B 206 to process the document to continuously process the workflow.

In the present exemplary embodiment, the document processing program B 206 also includes the holt folder management unit 323 to transfer the document via the hot folder similarly as the document processing program A 205. However, another unit that notifies the file path may be used.

In the present exemplary embodiment, the second document processing program B 206 does not include the user interface, however may include the user interface similar to the document processing program A 205. In this case, it is possible to limit a function that may cause a mismatch of the workflow by applying the processing similar to that illustrated in Fig. 5.

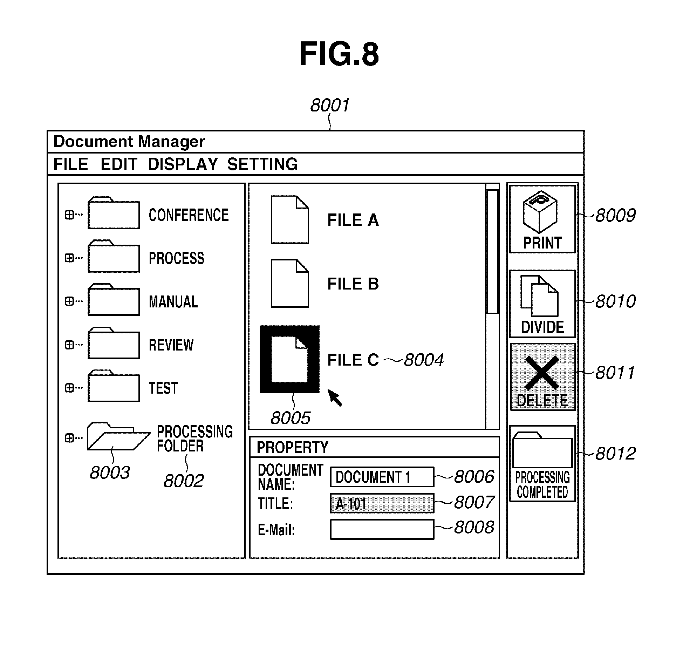

Fig. 8 illustrates an example of a screen displayed as the user interface of the document processing program A 205 according to the exemplary embodiment of the present invention. In a main window 8001, a folder display area 8002 displays folders managed by the document processing program A 205.

A processing folder 8003 is a folder for processing a target document of the workflow. A document display area 8004 displays a list of the documents which are present in the folder selected in the folder display area 8002. In Fig. 8, the processing folder 8003 is selected and the list of the documents therein is displayed by the processing in steps S504 to S506.

A selected document 8005 represents a document which is currently selected, and print 8009, divide 8010, delete 8011, and processing completed 8012 are operation targets with respect to the selected document. A document name 8006, a title 8007, and an e-mail 8008 are attribute information of the selected document 8005.

In Fig. 8, the title 8007 is in an edition-disabled state according to the attribute information 608. More specifically, the document processing program A 205 refers to a description, <editable>false<editable>, in Fig. 6B to display the user interface as illustrated in Fig. 8 in which the title cannot be edited.

For example, when the workflow management program associates a document requested to be processed with a document of a processing result by the title, if the title is changed in the document processing program A 205, both documents cannot be associated with each other and the workflow may not be normally completed. In such a case, the workflow management program describes an instruction to disable the edition of the title in the processing information file, so that the user interface illustrated in Fig. 8 is displayed, and a situation in which the workflow cannot be normally completed can be prevented.

The print 8009 is a function button for printing the document to be processed. The divide 8010 is a function button for dividing the document to be processed. The delete 8011 is a function button for deleting the document to be processed. The processing completed 8012 is a function for returning the processing of the workflow from the document processing program A 205 to the workflow management program after the processing is completed in the document processing program A 205. In other words, when the processing completed 8012 is instructed, the document processing program A 205 stores the processed document in the hot folder managed by the workflow management program, so that the processed document can be transmitted to the workflow management program.

Since the document processing program A 205 prohibits the deletion of the document within the processing folder as limited information, the user interface in which the delete 8011 (corresponding to a predetermined function) cannot be selected is displayed as illustrated in Fig. 8.

According to the above-described procedures, even when the program including the user interface is present in the processing program of the workflow system, the function that causes the mismatch in the workflow can be limited and the mismatch can be prevented from being generated. Further, by considering whether a condition of limiting the function causing the mismatch is returned to the input source and the document in addition, the mismatch can be prevented from being generated even under an environment in which workflow systems of different types coexist.

Aspects of the present invention can also be realized by a computer of a system or apparatus (or devices such as a CPU or an MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. An information processing apparatus capable of transmitting a document processed by a first processing program to a second processing program, the information processing apparatus comprising:
selection means configured to select a document to be a processing target; and
display control means configured to display a user interface that disables a user to select a predetermined function if the document selected by the selection means is transmitted to the second processing program and display a user interface that enables the user to select the predetermined function if the selected document is not transmitted to the second processing program.

2. The information processing apparatus according to claim 1, wherein the predetermined function is a function of instructing deletion of a document.

3. The information processing apparatus according to claim 1 or claim 2, further comprising storage means configured to, if completion of the processing of the document selected by the selection means is indicated, store the processing-completed document in a folder monitored by the second processing program.

4. The information processing apparatus according to any one of claims 1 to 3, wherein the second processing program is an application that generates a workflow for applying a plurality of types of processing to a document.

5. The information processing apparatus according to any one of claims 1 to 4, further comprising acquisition means configured to acquire an input source of the document,
wherein the predetermined function is changed based on the input source acquired by the acquisition means.

6. A method of control which is executed in an information processing apparatus capable of transmitting a document processed by a first processing program to a second processing program, the method comprising:
selecting a document to be a processing target; and
displaying a user interface that disables a user to select a predetermined function if the selected document is transmitted to the second processing program and displaying a user interface that enables the user to select the predetermined function if the selected document is not transmitted to the second processing program.

7. The method according to claim 6, wherein the predetermined function is a function of instructing deletion of a document.

8. The method according to claim 6 or claim 7, further comprising, if completion of the processing of the selected document is indicated, storing the processing-completed document in a folder monitored by the second processing program.

9. The method according to any one of claims 6 to 8, wherein the second processing program is an application that generates a workflow for applying a plurality of types of processing to a document.

10. The method according to any one of claims 6 to 9, further comprising acquiring an input source of the document,
wherein the predetermined function is changed based on the acquired input source.

11. A storage medium storing a program executed in a computer capable of transmitting a document processed by a first processing program to a second processing program, the program comprising:
selecting a document to be a processing target; and
displaying a user interface that disables a user to select a predetermined function if the selected document is transmitted to the second processing program and displaying a user interface that enables the user to select the predetermined function if the selected document is not transmitted to the second processing program.

12. The storage medium according to claim 11, wherein the predetermined function is a function of instructing deletion of a document.

13. The storage medium according to claim 11 or claim 12, wherein the program further comprises, if completion of the processing of the selected document is indicated, storing the processing-completed document in a folder monitored by the second processing program.

14. The storage medium according to any one of claims 11 to 13, wherein the second processing program is an application that generates a workflow for applying a plurality of types of processing to a document.

15. The storage medium according to any one of claims 11 to 14, wherein the program further comprises acquiring an input source of the document,
wherein the predetermined function is changed based on the acquired input source.
